(19) Europäisches Patentamt / European Patent Office / Office européen des brevets

(11) **EP 4 060 849 B1**

(12) **EUROPEAN PATENT SPECIFICATION**

(45) Date of publication and mention
of the grant of the patent:
**02.08.2023  Bulletin 2023/31**

(21) Application number: **21193653.9**

(22) Date of filing: **27.08.2021**

(51) International Patent Classification (IPC):
***H02J 3/24*** *(2006.01)*

(52) Cooperative Patent Classification (CPC):
**H02J 3/242**

(54) **STATE ESTIMATION SYSTEM, AND STATE ESTIMATION METHOD**

STATUSSCHÄTZUNGSVORRICHTUNG UND STATUSSCHÄTZUNGSVERFAHREN

SYSTÈME ET PROCÉDÉ D'ESTIMATION D'ÉTAT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **18.03.2021   JP 2021045084**

(43) Date of publication of application:
**21.09.2022   Bulletin 2022/38**

(73) Proprietor: **Hitachi, Ltd.
Tokyo 100-8280 (JP)**

(72) Inventors:
  • **KIRIHARA, Kenta
  Tokyo 100-8280 (JP)**
  • **UENO, Shintaro
  Tokyo 100-8280 (JP)**
  • **YATSU, Masahiro
  Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
**US-A1- 2016 239 010     US-A1- 2020 212 676
US-B2- 10 666 051**

**Description**

Technical Field

The present invention relates to a technology to estimate the state of an electrical power system.

Background Art

Conventionally, technologies to perform state estimation of an electrical power system from limited measurement information have been used because it is difficult to install measurement apparatuses in all units of equipment in the electrical power system. In state estimation, a remote telemetry unit (RTU: Remote Telemetry Unit) determines a bus voltage, and a phase in an electrical power system from an effective-value measurement voltage, and measurement current.

State estimation is a function necessary for current operation of an electrical power system, and performance requirements such as precision, convergence and computation speeds are important. Typically, as countermeasure methods for the performance enhancement of state estimation, (1) measurement information is increased (measurement units are installed additionally), (2) the measurement precision is increased, (3) the precision of system modeling used for the state estimation is increased, (4) algorithms of the state estimation are improved, and so on. In recent years, emphasis is placed on (1), and (2), and there are two types of measurement unit that are attracting attention.

One of the two types of measurement unit is phasor measurement units (PMUs: Phasor Measurement Units) that make it possible to measure a phase that is required for state estimation, along with the development of the measurement technology. PMUs can calculate effective-value voltages, phases, and the like by using synchronized time (see Nonpatent Literature 1). Accordingly, by using a voltage, and a phase measured by a PMU as reference values for state estimation, the performance enhancement of state estimation can be expected. It should be noted however that, as described in Nonpatent Literature 2, PMUs cannot measure phases correctly when a significant state change occurred in an electrical power system, or in other situations. As a state estimation method that makes use of such characteristics of PMUs, for example, there is a method in which estimation of the state of an entire system is performed by performing estimation of the state of each partial system, and using measurement information of PMUs (see Patent Literature 1).

The other is instantaneous value measurement units, development of which has been enabled by the progress of communication lines. An instantaneous value measurement unit is an apparatus that serially measures instantaneous values of an electrical power system, and communicates the instantaneous values as digital signals, and can collect more specific information than information that PMUs can collect (see Nonpatent Literature 2). Due to characteristics of instantaneous value measurement units, they are expected to be installed at points where instantaneous values are required in the coming future, for example near a renewable energy power supply, and so on. Accordingly, there is also an expectation regarding the performance enhancement of state estimation which is enabled by using instantaneous value measurement units.

State estimation requires conversion of instantaneous values of instantaneous value measurement units because it is executed by using, as input, measurement information of effective values. From the information of instantaneous values, it is possible to calculate both effective values, and phases as with PMUs, for example. Alternatively, it is also possible to use known methods of converting instantaneous values into effective values (see Patent Literature 2, and Patent Literature 3, for example).

It is described in Patent Literature 2 that "for example, a current effective value is calculated every second (Step S22), and time-series data of current effective values is stored in the storage section 16b," and calculation timings of the effective value are specified. A method of calculating positive-phase voltage instantaneous values, and positive-phase voltage effective values is described in Patent Literature 3.

In a case that a purpose is the performance enhancement of state estimation, it is expected that PMUs and instantaneous value measurement units can be used, in addition to RTUs.

Citation List

Patent Literatures

Patent Literature 1: U.S. Patent Application Publication No. 2020/0099252
Patent Literature 2: Japanese Unexamined Patent Application Publication No. 2014-75923
Patent Literature 3: WO2008/120282

US10666051B2 discloses a state estimation system which uses phasor measurement units (PMU's) in order to determine phasors in the system. This includes determination of the phases of the measurements.

Nonpatent Literatures

Nonpatent Literature 1: IEEE C37.118.1-2011
Nonpatent Literature 2: A. Riepnieks, H. Kirkham, A. J. Faris and M. Engels, "Phase jumps in PMU signal generators," 2017 IEEE Power & Energy Society General Meeting, Chicago, IL, 2017, pp. 1-5, doi: 10.1109/PESGM.2017.8274356.

Summary of Invention

Technical Problem

For the performance enhancement of state estimation, it is important to have a larger amount of highly precise information as mentioned before. In this process, effective-value voltages and phases measured by PMUs, or effective-value voltages and phases calculated on the basis of instantaneous values are considered to be able to contribute to the performance enhancement of the state estimation when the electrical power system is operating normally. However, when abnormalities occur in the electrical power system, or in instantaneous values which are the basis of measurement information, wrong phase information is used for the state estimation, and there is a concern over the performance deterioration of the state estimation.

The present invention has been made in view of the circumstance described above, and an object of the present invention is to provide a technology that makes it possible to enhance the performance of estimation of the state of an electrical power system.

Solution to Problem

In order to achieve the object described above, a state estimation system according to one aspect is a state estimation system that estimates a state of an electrical power system, the state estimation system including: a storage section that stores instantaneous value information which is information of instantaneous values received from the electrical power system, and reception measurement information including phase information received from the electrical power system; a judging section that judges, on a basis of the instantaneous value information, whether or not effective phase information can be obtained from the instantaneous value information; an instantaneous value processing section that calculates phase information, and an effective value from the instantaneous value information in a case that it is judged that effective phase information can be obtained from the instantaneous value information, and calculates an effective value without calculating phase information from the instantaneous value information in a case that it is judged that effective phase information cannot be obtained from the instantaneous value information; and/or a state estimating section that estimates the state of the electrical power system on a basis of: the phase information, and the effective value that are calculated by the instantaneous value processing section, or the effective value calculated without calculating the phase information; the reception measurement information; and a topology of the electrical power system.

Advantageous Effects of Invention

According to the present invention, it is possible to enhance the performance of estimation of the state of an electrical power system.

Brief Description of Drawings

Fig. 1 is a configuration diagram of an example of an electrical power system.
Fig. 2 is a functional configuration diagram of an example of a state estimation system according to one embodiment.
Fig. 3 is a hardware configuration diagram of an example of the state estimation system according to the one embodiment.
Fig. 4 is a figure depicting an example of an instantaneous value process rule according to the one embodiment.
Fig. 5 is a flowchart of an example of an overall process of the state estimation system according to the one embodiment.

Fig. 6 is a flowchart of an example of an instantaneous value process according to the one embodiment.

Fig. 7 is a figure depicting a specific example of a phase calculation judgement according to the one embodiment.

Fig. 8 is a flowchart of an example of a state estimation process according to the one embodiment.

Fig. 9 is a figure depicting an example of an estimation result display screen according to the one embodiment.

Fig. 10 is a figure for explaining advantageous effects of the state estimation process according to the one embodiment.

Description of Embodiments

An embodiment is explained with reference to the figures. Note that the embodiment explained below does not limit the invention according to claims, and also all elements, and combinations of the elements that are explained in the embodiment are not necessarily essential for the solution according to the invention.

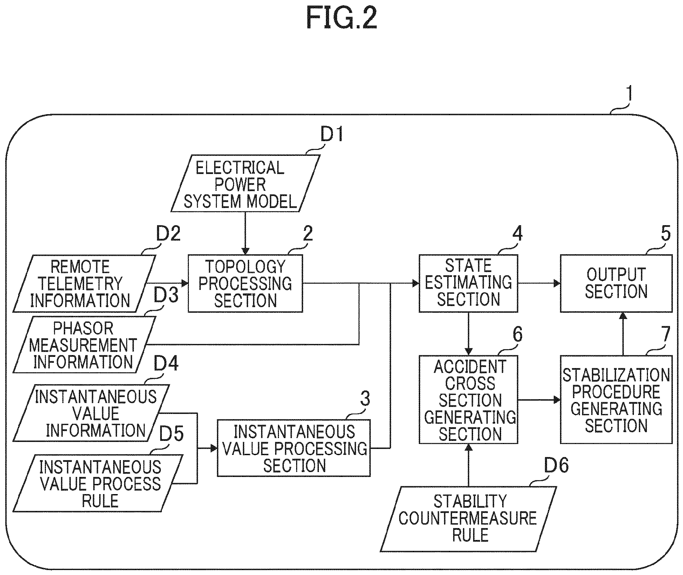

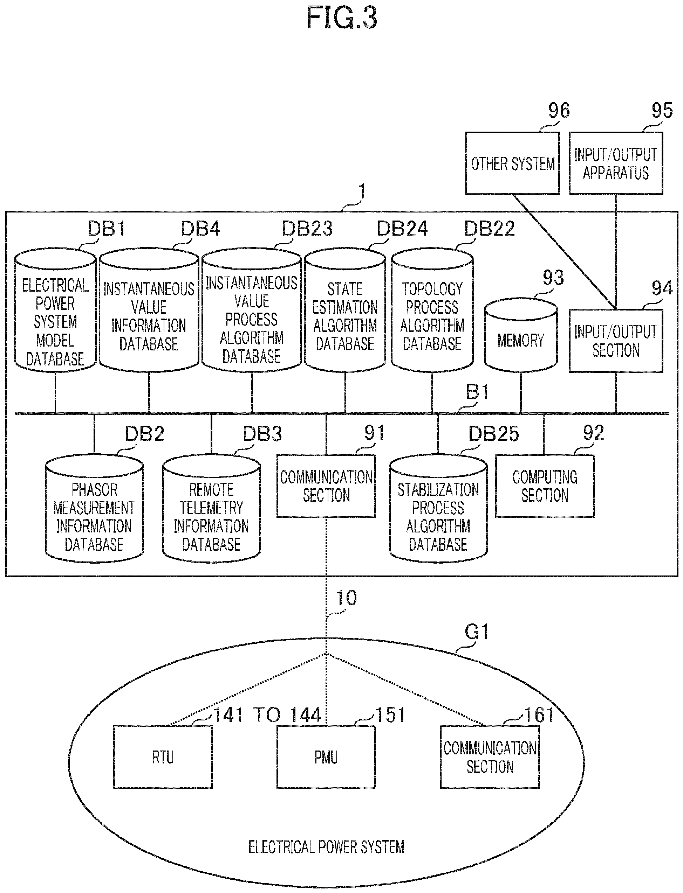

First, an example of an electrical power system which is a target of state estimation by a state estimation system 1 (see Fig. 2, and Fig. 3) according to the present embodiment is explained.

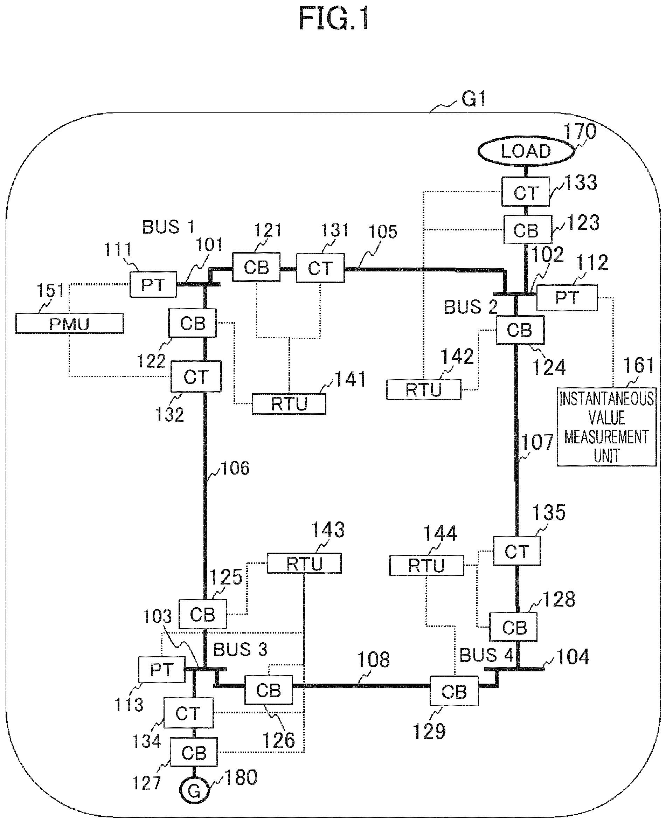

Fig. 1 is a configuration diagram of an example of the electrical power system.

An electrical power system G1 has: a plurality of buses 101 to 104 (Bus 1 to Bus 4); power lines 105 to 108 connecting the buses 101 to 104; Potential Transformers (PTs) 111 to 113 that measure bus voltages; Circuit Breakers (CBs) 121 to 129 that interrupt paths; Current Transformers (CTs) 131 to 135 that measure power line currents; Remote Telemetry Units (RTUs) 141 to 144; a Phasor Measurement Unit (PMU) 151 that measures a phase; an instantaneous value measurement unit 161; a load (Load) 170; and a generator (G) 180.

RTUs 141 to 144 measure effective values of voltages or currents at measurement points. In addition, RTUs 141 to 144 acquire information of the CBs connected therewith. It is possible to grasp the configuration of connections between the buses in accordance with the information of the CBs. PMU 151 measures the effective-value voltage, and the phase. The instantaneous value measurement unit 161 converts instantaneous values of an analog signal measured by a measurement unit connected therewith into instantaneous values of a digital signal, and transmits the instantaneous values of the digital signal to the state estimation system 1 via a network which is not depicted.

Note that PTs, and CTs that cannot acquire information in the state estimation system 1 are omitted in the example in Fig. 1. In addition, the electrical power system G1 may include other configurations such as transformers, breakers, shunt reactors, shunt capacitors or batteries.

In the electrical power system G1, Bus 1, and Bus 2 are connected via the power line 105, Bus 1, and Bus 3 are connected via the power line 106, Bus 2, and Bus 4 are connected via the power line 107, and Bus 3, and Bus 4 are connected via the power line 108.

Bus 1 is connected with PT 111. The power line 105 is connected with CB 121, and CT 131. The power line 106 is connected with CB 122, CT 132, and CB 125. PT 111, and CT 132 are connected with PMU 151. CB 121, CB 122, and CT 131 are connected with RTU 141.

Bus 2 is connected with PT 112. In addition, Bus 2 is connected with the load 170 via CB 123, and CT 133. The power line 107 is connected with CB 124, CT 135, and CB 128. CB 123, CB 124, and CT 133 are connected with RTU 142. PT 112 is connected with the instantaneous value measurement unit 161. In the example in Fig. 1, the instantaneous value measurement unit 161 converts instantaneous values of an analog signal of a bus voltage measured by PT 112 into instantaneous values of a digital signal, and transmits the instantaneous values of the digital signal to the state estimation system 1 via a communication line 10 (see Fig. 3). Note that the instantaneous value measurement unit 161 may be connected to a CT, convert a current of a power line into instantaneous values of a digital signal, and transmit the instantaneous values of the digital signal.

Bus 3 is connected with PT 113. In addition, Bus 3 is connected with the generator 180 via CT 134, and CB 127. The power line 108 is connected with CB 126, and CB 127. PT 113, CBs 125, 126, and 127, and CT 134 are connected with RTU 143.

CB 128, and 129, and CB 128 are connected with RTU 144.

Information that the state estimation system 1 can collect from the electrical power system G1 via the communication line 10 is information measured by RTUs 141 to 144, PMU 151, and the instantaneous value measurement unit 161. Here, from the information (instantaneous values) that can be collected from the instantaneous value measurement unit 161, an effective value ($V_2$ below) can be calculated by applying a conversion logic at an RTU, and an effective value, and a phase ($V_2$, and $\theta_2$ below) can be calculated by applying a conversion logic at a PMU.

Accordingly, measurement information m that the state estimation system 1 can acquire is any of those represented by Formulae (1), and (2).

$$m= [V_1,\ \theta_1,\ I_{1-2},\ I_{1-3},\ I_{2-L},\ V_3,\ I_{3-G},\ I_{4-2},\ V_2,\ \theta_2] \cdots (1)$$

$$m= [V_1,\ \theta_1,\ I_{1-2},\ I_{1-3},\ I_{2-L},\ V_3,\ I_{3-G},\ I_{4-2},\ V_2] \cdots (2)$$

Here, V represents an effective-value voltage, $\theta$ represents a voltage phase, and I represents an effective-value current. In addition, the suffix of each character represents a measurement point, and represents any of the buses 1 to 4, the load (L), and the generator (G), or a point between any two of these.

In addition, it is possible to grasp the configuration of connections between the buses in accordance with information of CBs from RTU 141.

Here, estimation (state estimation) of the state of the electrical power system is explained. Estimation of the state of the electrical power system means estimation of an effective-value voltage, and a phase of each bus from measurement information, for example. A possible example of state estimation relates to an optimization problem of minimizing an assumed error included in measurement information of a measurement unit collected from the electrical power system as represented by the following Formula (3). Note that a restriction condition at this time is Formula (4) .

$$\min \sum W_{ii} r_i^2 \cdots (3)$$

$$s.t \ Z_i = h_i(x) + r_i \cdots (4)$$

Here, $W_{ii}$ represents a weight for manipulating the priority of each piece of measurement information, $r_i$ represents the assumed error of the measurement unit, $z_i$ represents the measurement information, x represents a decision variable, specifically x= $[V_1, V_2, V_3, V_4, \theta_1, \theta_2, \theta_3, \theta_4]$, and $h_i$ is a function representing the relationship between the measurement information $z_i$, and the decision variable x.

In the electrical power system G1, if $V_1, \theta_1, V_2$, and $\theta_2$ are measured correctly, the precision of state estimation, the convergence time, and the convergence can be enhanced by reducing the decision variable x, or by providing a reference value. It should be noted however that when there is an abnormality occurring in the electrical power system G1, there is a possibility that $\theta_1$, and $\theta_2$ differ significantly from the correct values, and reducing the decision variable x, or using a reference value accompanies a risk.

Next, functions of the state estimation system are explained.

Fig. 2 is a functional configuration diagram of an example of the state estimation system according to one embodiment.

As input information to be used for processes, the state estimation system 1 stores an electrical power system model D1, a remote telemetry information D2, a phasor measurement information D3, an instantaneous value information D4, an instantaneous value process rule D5, and a stability countermeasure rule D6. The state estimation system 1 includes a topology processing section 2, an instantaneous value processing section 3 as an example of a judging section, a state estimating section 4, an output section 5 as an example of a state output section, and a judgement result output section, an accident cross section generating section 6, and a stabilization procedure generating section 7.

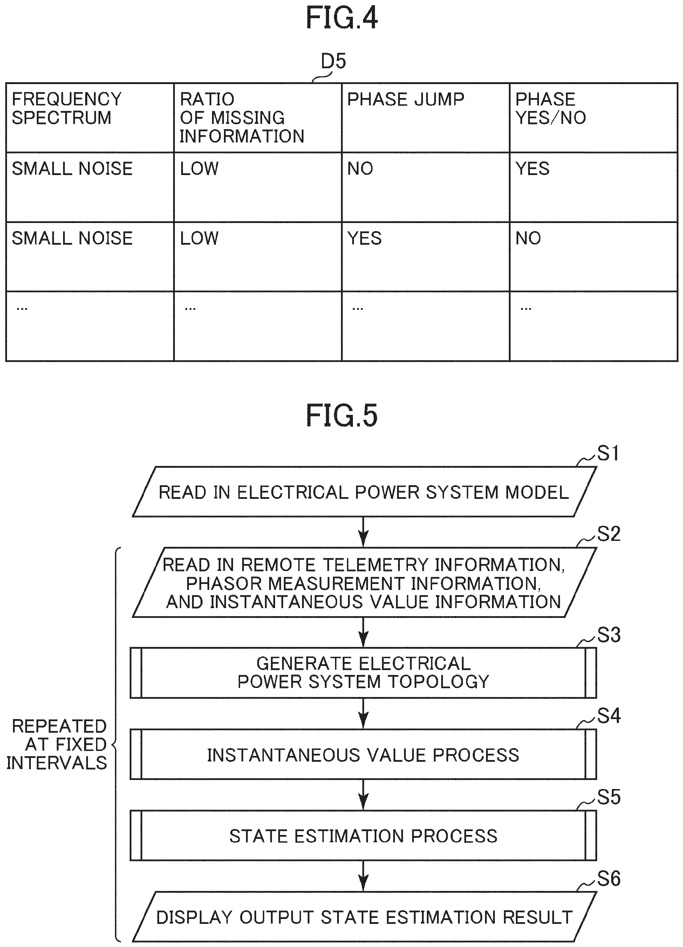

The electrical power system model D1 is a model representing constituent elements of the electrical power system, and includes, for example, the relationships of connection between buses, the positions of CBs, the impedance of power lines, and transformers, and the like. The remote telemetry information D2 is an example of reception measurement information, and includes one or more of: bus voltages measured as effective values; power line flow information; and on/off information (on/off of power transmission routes) of power transmission routes. The remote telemetry information D2 is received from RTUs 141 to 144. The phasor measurement information D3 is an example of reception measurement information, and include one or more of: effective-value voltages, and voltage phases; and effective-value currents, and current phases. The phasor measurement information D3 is received from PMU 151. The instantaneous value information D4 includes information (instantaneous value information) about instantaneous values (voltage values, or current values) measured by the instantaneous value measurement unit 161, and information about digital signals which are obtained by changing analog signals measured by PTs or CTs, for example. The instantaneous value process rule D5 is a rule that is used at a time of an instantaneous value process, and is for judging whether to or not to calculate a phase from instantaneous values, that is, judging whether or not effective phase information can be obtained from the instantaneous values, on the basis of at least one a frequency spectrum, a ratio of missing information, a phase jump and the like. Note that the instantaneous value process rule D5 is mentioned below by using Fig. 4. The stability countermeasure rule D6 is a rule of a stabilization procedure that enhances the stability of an accident cross section.

The topology processing section 2 uses, as input, the electrical power system model D1, and the remote telemetry information D2 to generate a topology (electrical power system topology) of an electrical power system which is the target of state estimation.

The instantaneous value processing section 3 uses, as input, the instantaneous value information D4, and the instantaneous value process rule D5 to judge whether or not effective phase information can be obtained from instantaneous values, and output an effective value (an effective voltage value, an effective current value), or an effective value and a phase from the instantaneous values in accordance with a result of the judgement.

The state estimating section 4 uses, as input, the remote telemetry information D2, the phasor measurement information D3, the electrical power system topology generated by the topology processing section 2, and the information (the effective value, or the effective value and the phase) output by the instantaneous value processing section 3 to perform state estimation, and output a result of the state estimation. Note that, as a method of estimating the state of an electrical power system, known technologies such as those for state estimation mentioned above can be used. Note that, in the state estimation, an effective value of the remote telemetry information D2 may be used as necessary.

The output section 5 outputs, via a Graphical User Interface (GUI) or an Application Programming Interface (API), the input information input to processes at the state estimation system 1, the state estimation result, and a stability enhancement procedure and the like that are mentioned below. Here, the state estimation result may include an indication as to whether or not there is convergence of the state estimation, an estimated state, a flow computed on the basis of the estimated state, and the like. In addition, the output section 5 may output a result of the judgement by the instantaneous value processing section 3 as to whether or not effective phase information can be obtained from instantaneous values, along with a reason for the judgement.

The accident cross section generating section 6 generates an accident cross section of the electrical power system on the basis of a result of the state estimation by the state estimating section 4. Specifically, the accident cross section generating section 6 generates an accident cross section of the electrical power system on the basis of the state estimation result, and an accident case example that has occurred in the electrical power system.

The stabilization procedure generating section 7 uses, as input, the accident cross section generated by the accident cross section generating section 6, and the stability countermeasure rule to generate a procedure (stability enhancement procedure) that enhances the stability in the accident cross section.

Next, the hardware configuration of the state estimation system 1 is explained.

Fig. 3 is a hardware configuration diagram of an example of the state estimation system according to the one embodiment.

The state estimation system 1 is connected communicatively with RTUs 141 to 144, PMU 151, and the instantaneous value measurement unit 161 of the electrical power system G1 via the communication path 10.

The state estimation system 1 is connected with an input/output apparatus 95, and another system 96. The input/output apparatus 95 is a mouse, a keyboard, a monitor or the like, for example. The input/output apparatus 95 receives inputs of information from a user via a GraphicUser Interface (GUI), for example, and displays various types of information. For example, the other system 96 acquires information from the state estimation system 1, executes various types of process, display-outputs various types of information, and so on.

The state estimation system 1 includes one computer, for example, and includes an electrical power system model database DB1, a phasor measurement information database DB2, a remote telemetry information database DB3, an instantaneous value information database DB4, a topology process algorithm database DB22, an instantaneous value process algorithm database DB23 as an example of a rule storage section, a state estimation algorithm database DB24, a stabilization process algorithm database DB25, a communication section 91, a computing section 92, a memory 93, and an input/output section 94. The respective configurations DB1 to DB4, DB22 to DB25, and 91 to 94 are connected via a data bus B1.

The electrical power system model database DB1, the phasor measurement information database DB2, the remote telemetry information database DB3, the instantaneous value information database DB4, the topology process algorithm database DB22, the instantaneous value process algorithm database DB23, the state estimation algorithm database DB24, and the stabilization process algorithm database DB25 are included in a storage device (an example of a storage section) such as a hard disk or a flash memory, for example.

The electrical power system model database DB1 stores the electrical power system model D1. The phasor measurement information database DB2 stores the phasor measurement information D3. The remote telemetry information database DB3 stores the remote telemetry information D2. The instantaneous value information database DB4 stores the instantaneous value information D4. The phasor measurement information D3, the remote telemetry information D2, and the instantaneous value information D4 may be acquired by the computing section 92 actively or passively via the communication path 10. The topology process algorithm database DB22 stores a program to realize an algorithm of a topology process. The instantaneous value process algorithm database DB23 stores a program to realize an algorithm of an instantaneous value process, and the instantaneous value process rule D5. The state estimation algorithm database DB24 stores a program to execute an algorithm of a state estimation process. The stabilization process algorithm database DB25 stores a program to execute an algorithm of a stabilization process, and the stability countermeasure rule D6.

The communication section 91 communicates with each unit of equipment via the communication path 10.

The computing section 92 is a functional section that is in charge of the computing function in the operation by the state estimation system 1. The computing section 92 reads out programs from the topology process algorithm database DB22, the instantaneous value process algorithm database DB23, the state estimation algorithm database DB24, and the stabilization process algorithm database DB25 onto the memory 93, and executes the programs to thereby execute various types of process. In the present embodiment, by executing the programs, the computing section 92 configures the topology processing section 2, the instantaneous value processing section 3, the state estimating section 4, the output section 5, the accident cross section generating section 6, and the stabilization procedure generating section 7 depicted in Fig. 2. The computing section 92 includes, for example, a Central Processing Unit (CPU), a Graphical Processing Unit (GPU), a Field Programmable Gate Array (FPGA) and an Application Specific Integrated Circuit (ASIC).

The memory 93 stores programs to be executed at the computing section 92, and information that is generated in the course of computation of computation results. The memory 93 is a Random Access Memory (RAM), a Virtual Memory or the like, for example.

The input/output section 94 performs information input and output from and to the input/output apparatus 95, and exchanges various types of information with the other system 96.

Next, the instantaneous value process rule D5 is explained.

Fig. 4 is a figure depicting an example of the instantaneous value process rule according to the one embodiment.

The instantaneous value process rule D5 is a rule for determining whether or not there is a phase calculation from instantaneous value information (whether or not the phase information can be effective), and represents indexes about one or more determination items, and indications as to whether there are phase calculations about those indexes. The determination items include, for example, at least one of frequency spectrums, ratios of missing information, and phase jumps. Note that while the indexes of the items are defined qualitatively in Fig. 4, these indexes may be defined quantitatively. For example, the second entry of the instantaneous value process rule D5 represents that, in a case that the noise of a frequency spectrum is small, the ratio of missing information of data is low, and there is a phase jump, there is not a phase, that is, an effective phase cannot be calculated, and so a phase calculation is not to be performed.

Next, a process operation of the state estimation system 1 is explained.

Fig. 5 is a flowchart of an example of an overall process of the state estimation system according to the one embodiment.

The computing section 92 of the state estimation system 1 reads in the electrical power system model D1 from the electrical power system model database DB1 (Step S1). Next, the computing section 92 repetitively executes Steps S2 to S6 mentioned below on the basis of constant computation intervals to thereby monitor the state of the electrical power system at fixed intervals.

At Step S2, the computing section 92 reads in the phasor measurement information D3 from the phasor measurement information database DB2 onto the memory 93, reads in the remote telemetry information D2 from the remote telemetry information database DB3 onto the memory 93, and reads in the instantaneous value information D4 from the instantaneous value information database DB4 onto the memory 93.

Next, by executing the program of the topology process in the topology process algorithm database DB22, the computing section 92 generates an electrical power system topology (Step S3). Specifically, by collating positional information (breaker positional information) of CBs in the electrical power system included in the remote telemetry information D2, and the electrical power system model D1 having been read in at Step S1, the computing section 92 generates an electrical power system topology corresponding to the current state of the electrical power system G1.

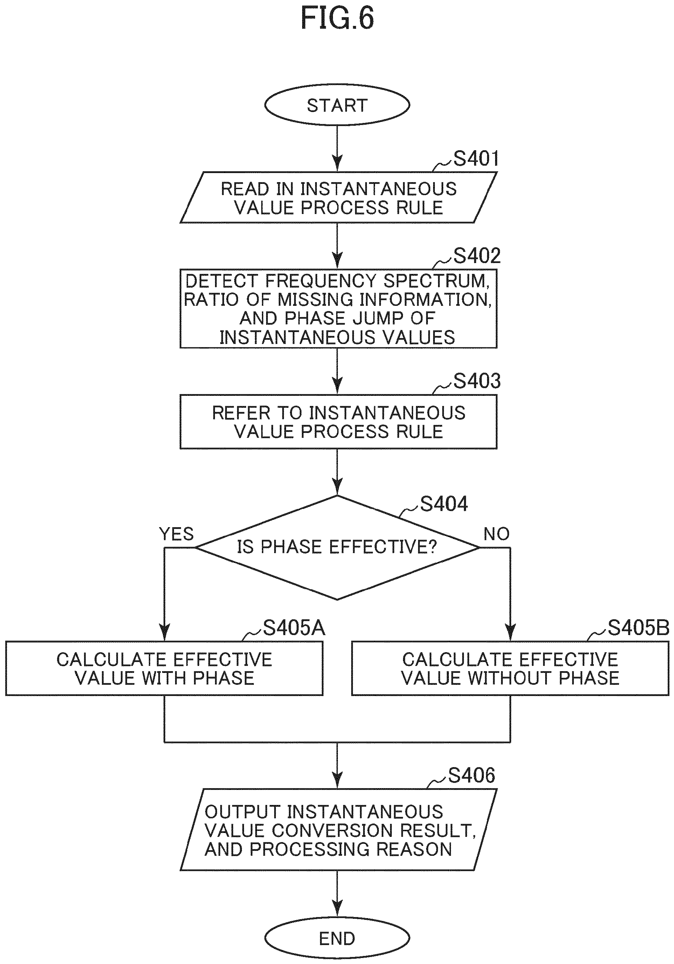

Next, by executing the program of the instantaneous value process in the instantaneous value process algorithm database DB23, the computing section 92 executes the instantaneous value process (see Fig. 6) of processing instantaneous value information on the basis of the instantaneous value process rule (Step S4).

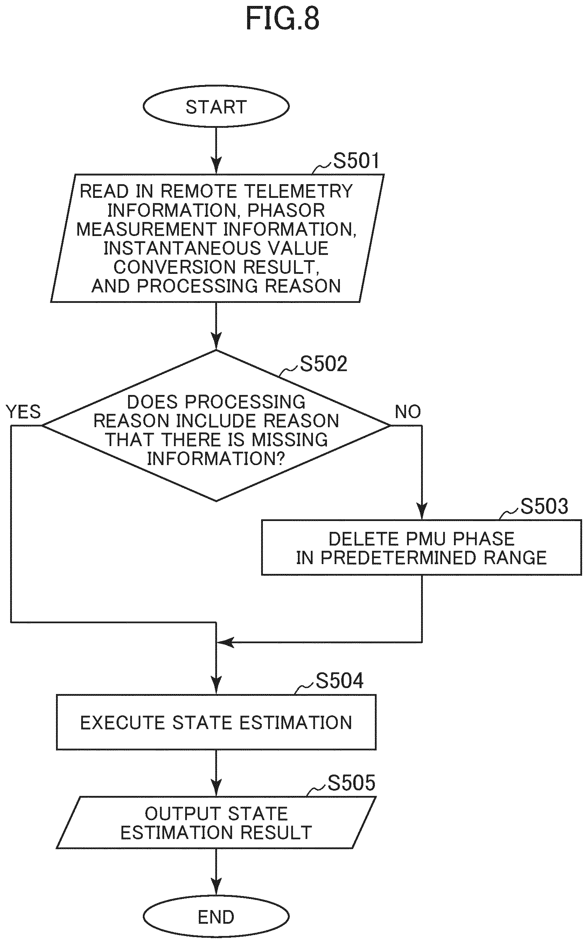

Next, by executing the program of the state estimation process in the state estimation algorithm database DB24, the computing section 92 executes the state estimation process (see Fig. 8) by using a processing result of the instantaneous value process (Step S5).

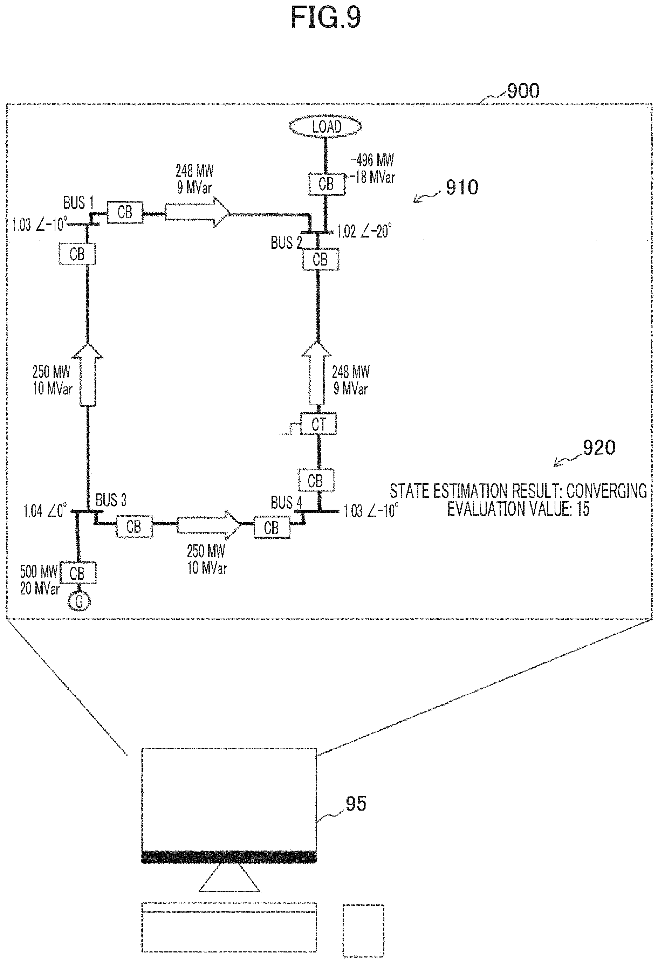

Next, the computing section 92 causes a state estimation result of the state estimation process to be display-output by an estimation result display screen (see Fig. 9), for example (Step S6) .

Next, the instantaneous value process (Step S4) is explained.

Fig. 6 is a flowchart of an example of the instantaneous value process according to the one embodiment.

The computing section 92 that executes the program of the instantaneous value process in the instantaneous value process algorithm database DB23 reads in the instantaneous value process rule D5 from the instantaneous value process algorithm database DB23 (Step S401). Next, the computing section 92 detects a frequency spectrum, a ratio of missing information, and a phase jump of instantaneous values in the instantaneous value information having been read in at Step S2 (Step S402).

The computing section 92 refers to the instantaneous value process rule D5, and identifies one rule corresponding to the frequency spectrum, the ratio of missing information, and the phase jump that are detected at Step S402 (Step S403).

Next, on the basis of the identified rule, the computing section 92 judges whether or not a phase calculation from the instantaneous values is necessary, that is, whether or not an effective phase can be calculated from the instantaneous values (Step S404).

In a case that, as a result, it is judged that a phase calculation is necessary (Step S404: Yes), the computing section 92 calculates, as an instantaneous value conversion result, a phase, and an effective value from the instantaneous values (Step S405A), and proceeds to the process at Step S406. Note that as a method of calculating the phase, and the effective value from the instantaneous values, a known method can be used. On the other hand, in a case that it is judged that a phase calculation is not necessary (Step S404: No), the computing section 92 calculates, as an instantaneous value conversion result, an effective value from the instantaneous values without calculating a phase (Step S405B), and proceeds to the process at Step S406. Note that as a method of calculating the effective value from the instantaneous values without calculating a phase, a known method can be used.

At Step S406, the computing section 92 outputs the instantaneous value conversion result (the phase, and effective value calculated in a case that Step S405A is executed, or the effective value calculated in a case that Step S405B is executed), and a processing reason (a reason why a phase is not calculated in the case that Step S405B is executed), and ends the instantaneous value process.

Here, a specific example of the phase calculation judgement at Step S404 is explained.

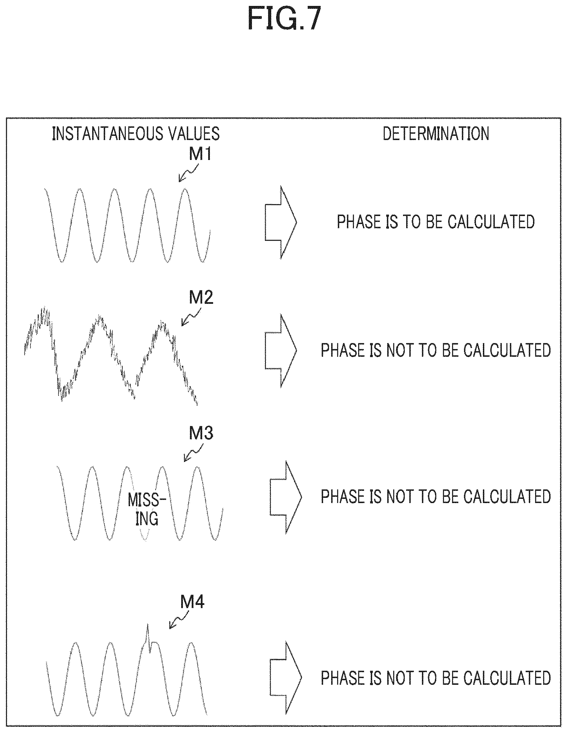

Fig. 7 is a figure depicting the specific example of the phase calculation judgement according to the one embodiment.

For example, instantaneous value information M1 is instantaneous value information obtained in a state that the electrical power system G1 is operating normally, and the instantaneous value measurement unit 161 is performing measurement normally. From the instantaneous value information M1, an effective phase can be calculated. Instantaneous value information M2 is instantaneous value information obtained in a state that noise occurred due to higher harmonics or PT malfunctions, for example. From the instantaneous value information M2, an effective phase cannot be calculated. Instantaneous value information M3 is instantaneous value information obtained in a state that there are some missing instantaneous values due to a malfunction of the communication function of any element between the instantaneous value measurement unit 161, and the state estimation system 1, for example. From the instantaneous value information M3, an effective phase cannot be calculated. Instantaneous value information M4 is instantaneous value information obtained in a state that a phase jump occurred in the electrical power system G1. From the instantaneous value information M4, an effective phase cannot be calculated. As described above, an effective phase can be calculated only from the instantaneous value information M1, and an effective phase cannot be calculated from the instantaneous value information M2 to M4.

In view of this, the instantaneous value conversion rule D5 includes a rule under which a phase is calculated in a state corresponding to the instantaneous value information M1, and rules under which a phase is not calculated in states corresponding to the instantaneous value information M2 to M4. At Step S404, these rules are followed, it is judged that a phase is to be calculated in a case that an effective phase can be calculated, and it is judges that a phase is not to be calculated in a case that an effective phase cannot be calculated. Thereby, it is possible to appropriately prevent a phase which is not effective from being calculated as an instantaneous value conversion result.

Next, the state estimation process (Step S5) is explained.

Fig. 8 is a flowchart of an example of the state estimation process according to the one embodiment.

The computing section 92 that executes the program of the state estimation process in the state estimation algorithm database DB24 reads in the remote telemetry information D2, the phasor measurement information D3, the instantaneous value conversion result calculated at the instantaneous value process, and the processing reason (in a case that a processing reason is output at the instantaneous value process) (Step S501).

Next, the computing section 92 judges whether or not a processing reason is included, and the processing reason includes a reason that there is missing information (Step S502). In a case that, as a result, it is judged that the processing reason includes a reason that there is missing information (Step S502: Yes), for example, the instantaneous value information is in a state that is represented by the instantaneous value information M3 in Fig. 7, it is considered that a reason therefor is that there is a communication failure between the electrical power system G1, and the instantaneous value measurement unit 161, and it is considered that there are no abnormalities about a phase measured in the electrical power system G1. Accordingly, the computing section 92 proceeds to the process at Step S504.

On the other hand, in a case that it is judged that the processing reason does not include a reason that there is missing information (Step S502: No), for example, the instantaneous value information is in any of the states that are represented by the instantaneous value information M1, M2, and M4 in Fig. 7, and it is considered that there is an abnormality of a phase occurring in the electrical power system G1. Accordingly, the computing section 92 deletes, from the phasor measurement information D3 having been read in at Step S501, phase information measured by PMUs in a predetermined range from the instantaneous value measurement unit 161 (Step S503), and proceeds to the process at Step S504. Here, the predetermined range may be set to, for example, a range including only points surrounding a bus which is a measurement target of the instantaneous value measurement unit 161, or to a range including the surrounding points, and points surrounding other buses each of which is connected to the bus via one power line. Note that the predetermined range is not limited to these, but only has to be a range over which a phase abnormality having occurred can have such an influence that makes it impossible to calculate an effective phase from instantaneous value information generated by the instantaneous value measurement unit 161. According to this process, it is possible to appropriately prevent a less reliable phase measured by a PMU from being undesirably made use of at the subsequent state estimation (Step S504), and it is possible to prevent the precision deterioration of the state estimation of the electrical power system.

At Step S504, in a case that the judgement result at Step S502 is Yes, the computing section 92 performs state estimation of the electrical power system G1 by using, as input, various types of information having been read in at Step S501, and, in a case that Step S503 is executed, state estimation of the electrical power system G1 is performed by using, as input, various types of information from which the phase information has been deleted at Step S503. Note that as an algorithm for performing the state estimation of the electrical power system, a known algorithm can be used.

Next, the computing section 92 outputs a state estimation result (Step S505), and ends the state estimation process. Here, the state estimation result includes, for example, an effective-value voltage, and a phase of each bus, convergence information as to whether the state estimation is converging or is not converging, and an evaluation value at that time point (an assumed error in the state estimation). Note that the state estimation result may include a result of calculation of information (power line flow information) about the flow of a power line based on the estimated effective-value voltage, and phase of each bus.

Next, an estimation result display screen 900 is explained.

Fig. 9 is a figure depicting an example of an estimation result display screen according to the one embodiment.

The estimation result display screen 900 is a screen displayed on the input/output apparatus 95, for example, and includes a topology display area 910, and a state estimation status display area 920.

In the topology display area 910, a figure of an estimated electrical power system topology of the electrical power system G1 is displayed, and information about an estimated effective-value voltage, and phase is displayed for each bus. 1.03L-10° depicted in the topology display area 910 represents that the ratio of the effective-value voltage relative to a reference voltage is 1.03, and the phase angle is -10°. In addition, in the topology display area 910, power line flow information like 248MW, and 9MVar is displayed, for example.

In the state estimation status display area 920, convergence information as to whether or not the state estimation is converging, and an evaluation value in the state estimation are displayed.

Next, advantageous effects of the state estimation process in the present embodiment are explained.

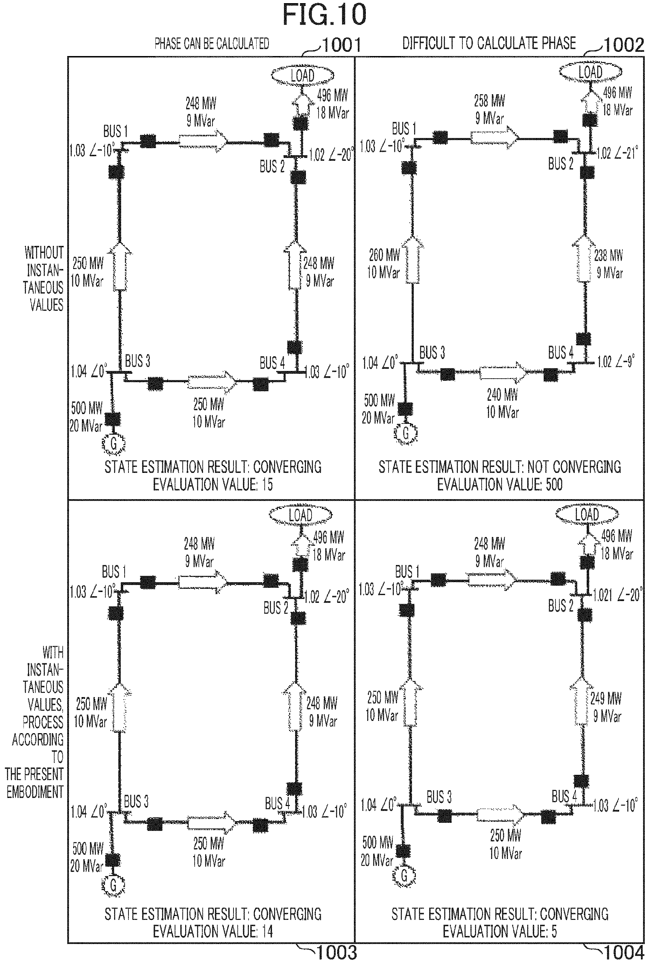

Fig. 10 is a figure for explaining advantageous effects of the state estimation process according to the one embodiment.

An estimation result 1001 in Fig. 10 represents an example of an estimation result obtained in a case that the state estimation process is performed without using instantaneous values measured by the instantaneous value measurement unit 161 in a state that an effective phase can be calculated from the instantaneous values, an estimation result 1002 represents an example of an estimation result obtained in a case that the state estimation process is performed without using instantaneous values measured by the instantaneous value measurement unit 161 in a state that it is difficult to calculate (calculation not possible) an effective phase from the instantaneous values, an estimation result 1003 represents an example of an estimation result obtained in a case that the state estimation process is performed by using instantaneous values measured by the instantaneous value measurement unit 161 in a state that an effective phase can be calculated from the instantaneous values, and an estimation result 1004 represents an example of an estimation result obtained in a case that the state estimation process is performed by using instantaneous values measured by the instantaneous value measurement unit 161 in a state that it is difficult to calculate (calculation not possible) an effective phase from the instantaneous values.

In a case that the state estimation process is performed without using instantaneous values measured by the instantaneous value measurement unit 161 in a state that an effective phase can be calculated from the instantaneous values, as depicted in the estimation result 1001, the result of the state estimation converges, and the evaluation value is 15.

In a case that the state estimation process is performed without using instantaneous values measured by the instantaneous value measurement unit 161 in a state that it is difficult to calculate (calculation not possible) an effective phase from the instantaneous values, the reliability of a phase measured by PMU 151 is low, and if the state estimation process is performed by using the phase, as depicted in the estimation result 1002, the result of the state estimation does not converge, the evaluation value is 500, and the precision of the state estimation deteriorates.

In a case that the state estimation process according to the present embodiment is performed by using instantaneous values measured by the instantaneous value measurement unit 161 in a state that an effective phase can be calculated from the instantaneous values, as depicted in the estimation result 1003, the result of the state estimation converges, and the evaluation value is 14. In this manner, by performing the state estimation process according to the present embodiment by using instantaneous values, the evaluation value becomes small relative to the estimation result 1001 obtained in a case that instantaneous values are not used, that is, the performance of the estimation result is enhanced.

In a case that the state estimation process according to the present embodiment is performed by using instantaneous values measured by the instantaneous value measurement unit 161 in a state that it is difficult to calculate an effective phase from the instantaneous values, a less reliable phase detected by PMU 151 is deleted, and the state estimation is performed by using an effective value not including a phase obtained on the basis of the instantaneous values. Accordingly, as represented by the estimation result 1004, the result of the state estimation converges, and the evaluation value is 5. In this manner, by performing the state estimation process according to the present embodiment by using instantaneous values, the result of the state estimation converges, the evaluation value becomes very small relative to the estimation result 1002 obtained in a case that instantaneous values are not used, that is, the performance of the estimation result is enhanced significantly.

Note that the present invention is not limited to the embodiment mentioned above, and can be implemented with modifications as appropriate within the scope not deviating from the gist of the present invention.

For example, while the electrical power system includes one instantaneous value measurement unit in the embodiment described above, the electrical power system may include a plurality of instantaneous value measurement units. In addition, while the instantaneous value measurement unit is connected to PTs or CTs, and measures instantaneous values in the embodiment described above, the present invention is not limited to this, and, for example, instantaneous values of the electrical power system may be measured in a contactless manner (e.g. on the basis of electromagnetic waves or the like).

In addition, while the state estimation system 1 includes one computer in the example depicted in the embodiment described above, the state estimation system 1 may include a plurality of computers. In addition, while an accident cross section of the electrical power system is generated on the basis of a state estimation result, and a procedure that enhances the stability of the accident cross section is generated on the basis of the generated accident cross section, and the stability countermeasure rule in the state estimation system 1 in the embodiment described above, these processes may be executed in another system.

In addition, some or all of the processes performed by the computing section 92 in the embodiment described above may be performed by a hardware circuit. In addition, the programs stored in the algorithm databases in the embodiment described above may be installed from a program source. The program source may be a program distribution server or a storage media (e.g. a portable storage media).

List of Reference Signs

| | |
|---|---|
| 1: | State estimation system |
| 2: | Topology processing section |
| 3: | Sequential processing section |
| 4: | State estimating section |
| 5: | Output section |
| 6: | Accident cross section generating section |
| 7: | Stabilization procedure generating section |
| 92: | Computing section |
| 93: | Memory |
| D1: | Electrical power system model |
| D2: | Remote telemetry information |
| D3: | Phasor measurement information |
| D4: | Instantaneous value information |
| D5: | Instantaneous value process rule |
| DB1: | Electrical power system model database |
| DB2: | Phasor measurement information database |
| DB3: | Remote telemetry information database |
| DB4: | Instantaneous value information database |
| DB22: | Topology process algorithm database |
| DB23: | Instantaneous value process algorithm database |
| DB24: | State estimation algorithm database |

DB25:     Stabilization procedure process algorithm database

**Claims**

1.  A state estimation system that is configured to estimate a state of an electrical power system, the state estimation system comprising:

    a storage section that is configured to store instantaneous value information (D4) which is information of instantaneous values received from the electrical power system, and reception measurement information including phase information received from the electrical power system;
    **characterised in that** the state estimation system further comprises:

    a judging section that is configured to judge, on a basis of the instantaneous value information (D4), whether or not effective phase information can be obtained from the instantaneous value information (D4);
    an instantaneous value processing section (3) that is configured to calculate phase information, and an effective value from the instantaneous value information (D4) in a case that it is judged that effective phase information can be obtained from the instantaneous value information (D4), and to calculate an effective value without calculating phase information from the instantaneous value information (D4) in a case that it is judged that effective phase information cannot be obtained from the instantaneous value information (D4); and
    a state estimating section (4) that is configured to estimate the state of the electrical power system on a basis of: the phase information, and the effective value that are calculated by the instantaneous value processing section (3), or the effective value calculated without calculating the phase information; the reception measurement information; and a topology of the electrical power system.

2.  The state estimation system according to claim 1, wherein, on a basis of at least one of a frequency spectrum, a ratio of missing information and a phase jump of instantaneous values included in the instantaneous value information (D4), the judging section is configured to judge whether or not effective phase information can be obtained from the instantaneous value information (D4).

3.  The state estimation system according to claim 1, further comprising a rule storage section that is configured to store a rule for judging whether or not effective phase information can be obtained from the instantaneous value information (D4), wherein
    on the basis of the rule, the judging section is configured to judge whether or not effective phase information can be obtained from the instantaneous value information (D4).

4.  The state estimation system according to claim 1, wherein, in a case that it is judged that effective phase information cannot be obtained from the instantaneous value information (D4), the state estimating section (4) is configured to judge whether or not a reason why the effective phase information cannot be obtained is that there is missing information of the instantaneous value information (D4), and, in a case that the reason is not that there is missing information of the instantaneous value information (D4), the state estimating section (4) is configured to delete phase information in the reception measurement information measured in a predetermined range from a predetermined point of the electrical power system measured by an instantaneous value measurement apparatus that has acquired the instantaneous value information (D4), and to estimate the state of the electrical power system.

5.  The state estimation system according to claim 1, further comprising a topology processing section (2) that is configured to estimate the topology of the electrical power system on a basis of information received from the electrical power system.

6.  The state estimation system according to claim 5, wherein

    a process, performed by the topology processing section (2), of estimating the topology of the electrical power system;
    a process, performed by the judging section, of judging whether or not effective phase information can be obtained from the instantaneous value information (D4);
    a process, performed by the instantaneous value processing section (3), of calculating phase information and an effective value from the instantaneous value information (D4) in a case that it is judged that effective phase information can be obtained from the instantaneous value information (D4), or a process, performed by the instantaneous value processing section (3), of calculating an effective value without calculating phase information from the instantaneous value information (D4) in a case that it is judged that effective phase information cannot be obtained from the instantaneous value information (D4); and

a process, performed by the state estimating section (4), of estimating the state of the electrical power system on a basis of: the phase information, and the effective value calculated by the instantaneous value processing section (3), or the effective value calculated without calculating the phase information; the reception measurement information; and the topology of the electrical power system

are executed at fixed intervals.

7. The state estimation system according to claim 1, further comprising a state output section that is configured to output an estimation result of the state of the electrical power system estimated by the state estimating section (4).

8. The state estimation system according to claim 1, further comprising a judgement result output section that is configured to output a result of the judgement by the judging section as to whether or not effective phase information can be obtained from the instantaneous value information (D4), along with a reason for the judgement.

9. The state estimation system according to claim 1, further comprising:

an accident cross section generating section (6) that is configured to generate an accident cross section of the electrical power system on a basis of the estimated state of the electrical power system, and an accident case example that has occurred in the electrical power system; and
a stabilization procedure generating section (7) that is configured to generate a procedure that enhances a stability in the accident cross section on a basis of a countermeasure rule that enhances a stability against an accident.

10. A state estimation method of estimating a state of an electrical power system, the state estimation method being **characterised by** comprising:

judging, on a basis of instantaneous value information (D4) which is information of instantaneous values received from the electrical power system, whether or not effective phase information can be obtained from the instantaneous value information (D4);
calculating phase information, and an effective value from the instantaneous value information (D4) in a case that it is judged that effective phase information can be obtained from the instantaneous value information (D4), and calculating an effective value without calculating phase information from the instantaneous value information (D4) in a case that it is judged that effective phase information cannot be obtained from the instantaneous value information (D4); and
estimating the state of the electrical power system on a basis of: the calculated phase information, and effective value, or the effective value calculated without calculating the phase information; the reception measurement information received from the electrical power system; and a topology of the electrical power system.

**Patentansprüche**

1. Zustandsschätzsystem, das konfiguriert ist, einen Zustand eines Stromsystems zu schätzen, wobei das Zustandsschätzsystem Folgendes umfasst:

einen Speicherabschnitt, der konfiguriert ist, Momentanwertinformationen (D4) zu speichern, die Informationen von Momentanwerten, die vom Stromsystem empfangen wurden, und Empfangsmessungsinformationen, die Phaseninformationen enthalten, die vom Stromsystem empfangen wurden, sind;
**dadurch gekennzeichnet, dass** das Zustandsschätzsystem ferner Folgendes umfasst:

einen Beurteilungsabschnitt, der konfiguriert ist, auf der Grundlage der Momentanwertinformationen (D4) zu beurteilen, ob aus den Momentanwertinformationen (D4) wirksame Phaseninformationen erhalten werden können oder nicht;
einen Momentanwertverarbeitungsabschnitt (3), der konfiguriert ist, Phaseninformationen und einen Effektivwert aus den Momentanwertinformationen (D4) zu berechnen, falls beurteilt wird, dass aus den Momentanwertinformationen (D4) wirksame Phaseninformationen erhalten werden können, und einen Effektivwert ohne Berechnen von Phaseninformationen aus den Momentanwertinformationen (D4) zu berechnen, falls beurteilt wird, dass aus den Momentanwertinformationen (D4) keine wirksamen Phaseninformationen erhalten werden können; und

einen Zustandsschätzabschnitt (4), der konfiguriert ist, den Zustand des Stromsystems auf der Grundlage von Folgendem zu schätzen: der Phaseninformationen und des Effektivwerts, der durch den Momentanwertverarbeitungsabschnitt (3) berechnet wird, oder des Effektivwerts, der berechnet wird, ohne die Phaseninformationen zu berechnen; der Empfangsmessungsinformationen und einer Topologie des Stromsystems.

2. Zustandsschätzsystem nach Anspruch 1, wobei der Beurteilungsabschnitt konfiguriert ist, auf der Grundlage eines Frequenzspektrums und/oder eines Anteils fehlender Informationen und/oder eines Phasensprungs von Momentanwerten, die in den Momentanwertinformationen (D4) enthalten sind, zu beurteilen, ob aus den Momentanwertinformationen (D4) wirksame Phaseninformationen erhalten werden können oder nicht.

3. Zustandsschätzsystem nach Anspruch 1, das ferner einen Regelspeicherabschnitt umfasst, der konfiguriert ist, eine Regel zu speichern, um zu beurteilen, ob aus den Momentanwertinformationen (D4) wirksame Phaseninformationen erhalten werden können oder nicht, wobei der Beurteilungsabschnitt konfiguriert ist, auf der Grundlage der Regel zu beurteilen, ob aus den Momentanwertinformationen (D4) wirksame Phaseninformationen erhalten werden können oder nicht.

4. Zustandsschätzsystem nach Anspruch 1, wobei der Zustandsschätzabschnitt (4) konfiguriert ist, falls beurteilt wird, dass aus den Momentanwertinformationen (D4) keine wirksamen Phaseninformationen erhalten werden können, zu beurteilen, ob ein Grund, warum die wirksamen Phaseninformationen nicht erhalten werden können, ist, dass fehlende Informationen der Momentanwertinformationen (D4) vorliegen, oder nicht, und der Zustandsschätzabschnitt (4) konfiguriert ist, falls der Grund nicht ist, dass fehlende Informationen der Momentanwertinformationen (D4) vorliegen, Phaseninformationen in den Empfangsmessungsinformationen, die in einem vorgegebenen Bereich von einem vorgegebenen Punkt des Stromsystems gemessen wurden, die durch eine Momentanwertmessungsvorrichtung, die die Momentanwertinformationen (D4) erfasst hat, gemessen wurden, zu löschen und den Zustand des Stromsystems zu schätzen.

5. Zustandsschätzsystem nach Anspruch 1, das ferner einen Topologieverarbeitungsabschnitt (2) umfasst, der konfiguriert ist, die Topologie des Stromsystems auf der Grundlage von Informationen zu schätzen, die vom Stromsystem empfangen wurden.

6. Zustandsschätzsystem nach Anspruch 5, wobei

ein Prozess, der durch den Topologieverarbeitungsabschnitt (2) durchgeführt wird, des Schätzens der Topologie des Stromsystems;

ein Prozess, der durch den Beurteilungsabschnitt durchgeführt wird, des Beurteilens, ob aus den Momentanwertinformationen (D4) wirksame Phaseninformationen erhalten werden können oder nicht;

ein Prozess, der durch den Momentanwertverarbeitungsabschnitt (3) durchgeführt wird, des Berechnens von Phaseninformationen und eines Effektivwerts aus den Momentanwertinformationen (D4), falls beurteilt wird, dass aus den Momentanwertinformationen (D4) wirksame Phaseninformationen erhalten werden können, oder ein Prozess, der durch den Momentanwertverarbeitungsabschnitt (3) durchgeführt wird, des Berechnens eines Effektivwerts ohne Phaseninformationen aus den Momentanwertinformationen (D4) zu berechnen, falls beurteilt wird, dass aus den Momentanwertinformationen (D4) keine wirksamen Phaseninformationen erhalten werden können; und

ein Prozess, der durch den Zustandsschätzabschnitt (4) durchgeführt wird, des Schätzens des Zustands des Stromsystems auf der Grundlage: der Phaseninformationen und des Effektivwert, der durch den Momentanwertverarbeitungsabschnitt (3) berechnet wird, oder des Effektivwerts, der berechnet wird, ohne die Phaseninformationen zu berechnen; der Empfangsmessungsinformationen und der Topologie des Stromsystems in festen Intervallen ausgeführt werden.

7. Zustandsschätzsystem nach Anspruch 1, das ferner einen Zustandsausgabeabschnitt umfasst, der konfiguriert ist, ein Schätzergebnis des Zustands des Stromsystems, das durch den Zustandsschätzabschnitt (4) geschätzt wird, auszugeben.

8. Zustandsschätzsystem nach Anspruch 1, das ferner einen Beurteilungsergebnisausgabeabschnitt umfasst, der konfiguriert ist, ein Ergebnis der Beurteilung durch den Beurteilungsabschnitt, ob aus den Momentanwertinformationen (D4) wirksame Phaseninformationen erhalten werden können oder nicht, zusammen mit einem Grund für die Beurteilung auszugeben.

9. Zustandsschätzsystem nach Anspruch 1, das ferner Folgendes umfasst:

einen Störfallquerschnitt-Erzeugungsabschnitt (6), der konfiguriert ist, einen Störfallquerschnitt des Stromsystems auf der Grundlage des geschätzten Zustands des Stromsystems und eines Störfall-Fallbeispiels, das im Stromsystem aufgetreten ist, zu erzeugen; und
einen Stabilisierungsprozedur-Erzeugungsabschnitt (7), der konfiguriert ist, eine Prozedur, die eine Stabilität im Störfallquerschnitt verbessert, auf der Grundlage einer Gegenmaßnahmenregel, die eine Stabilität gegen einen Störfall verbessert, zu erzeugen.

10. Zustandsschätzverfahren des Schätzens eines Zustands eines Stromsystems, wobei das Zustandsschätzverfahren **gekennzeichnet ist durch**

Beurteilen auf der Grundlage von Momentanwertinformationen (D4), die Informationen von Momentanwerten, die vom Stromsystem empfangen wurden, sind, ob aus den Momentanwertinformationen (D4) wirksame Phaseninformationen erhalten werden können oder nicht;
Berechnen von Phaseninformationen und eines Effektivwerts aus den Momentanwertinformationen (D4), falls beurteilt wird, dass aus den Momentanwertinformationen (D4) wirksame Phaseninformationen erhalten werden können, und Berechnen eines Effektivwerts ohne Berechnen von Phaseninformationen aus den Momentanwertinformationen (D4), falls beurteilt wird, dass aus den Momentanwertinformationen (D4) keine wirksamen Phaseninformationen erhalten werden können; und
Schätzen des Zustands des Stromsystems auf der Grundlage: der berechneten Phaseninformationen und des Effektivwerts oder des Effektivwerts, der berechnet wurde, ohne die Phaseninformationen zu berechnen; der Empfangsmessungsinformationen, die vom Stromsystem empfangen wurden; und einer Topologie des Stromsystems.

## Revendications

1. Système d'estimation d'état qui est configuré pour estimer un état d'un système de puissance électrique, le système d'estimation d'état comprenant :

une section de stockage qui est configurée pour stocker des informations de valeurs instantanées (D4) qui sont des informations de valeurs instantanées reçues depuis le système de puissance électrique, et des informations de mesurage de réception incluant des informations de phases reçues depuis le système de puissance électrique ;
**caractérisé en ce que** le système d'estimation d'état comprend en outre :

une section de jugement qui est configurée pour juger, sur une base des informations de valeurs instantanées (D4), si oui ou non des informations de phases réelles peuvent être obtenues à partir des informations de valeurs instantanées (D4) ;
une section de traitement de valeurs instantanées (3) qui est configurée pour calculer des informations de phases, et une valeur réelle à partir des informations de valeurs instantanées (D4) dans un cas où il est jugé que des informations de phases réelles peuvent être obtenues à partir des informations de valeurs instantanées (D4), et pour calculer une valeur réelle sans calculer d'informations de phases à partir des informations de valeurs instantanées (D4) dans un cas où il est jugé que des informations de phases réelles ne peuvent pas être obtenues à partir des informations de valeurs instantanées (D4) ; et
une section d'estimation d'état (4) qui est configurée pour estimer l'état du système de puissance électrique sur une base: des informations de phases, et de la valeur réelle qui sont calculées par la section de traitement de valeurs instantanées (3), ou de la valeur réelle calculée sans calculer les informations de phases ; des informations de mesurage de réception ; et d'une topologie du système de puissance électrique.

2. Système d'estimation d'état selon la revendication 1, dans lequel, sur une base d'au moins un élément parmi un spectre de fréquence, un taux d'informations manquantes et un saut de phase de valeurs instantanées inclus dans les informations de valeurs instantanées (D4), la section de jugement est configurée pour juger si oui ou non des informations de phases réelles peuvent être obtenues à partir des informations de valeurs instantanées (D4).

3. Système d'estimation d'état selon la revendication 1, comprenant en outre une section de stockage de règle qui est configurée pour stocker une règle destinée à juger si oui ou non des informations de phases réelles peuvent être obtenues à partir des informations de valeurs instantanées (D4), dans lequel sur la base de la règle, la section de jugement est configurée pour juger si oui ou non des informations de phases réelles peuvent être obtenues à partir des informations de valeurs instantanées (D4).

4. Système d'estimation d'état selon la revendication 1, dans lequel, dans un cas où il est jugé que des informations de phases réelles ne peuvent pas être obtenues à partir des informations de valeurs instantanées (D4), la section d'estimation d'état (4) est configurée pour juger si oui ou non une raison pour laquelle les informations de phases réelles ne peuvent pas être obtenues est qu'il y a des informations manquantes parmi les informations de valeurs instantanées (D4), et, dans un cas où la raison n'est pas qu'il y a des informations manquantes parmi les informations de valeurs instantanées (D4), la section d'estimation d'état (4) est configurée pour effacer les informations de phases dans les informations de mesurage de réception mesurées dans une plage prédéterminée à partir d'un point prédéterminé du système de puissance électrique mesuré par un appareil de mesurage de valeurs instantanées qui a acquis les informations de valeurs instantanées (D4), et pour estimer l'état du système de puissance électrique.

5. Système d'estimation d'état selon la revendication 1, comprenant en outre une section de traitement de topologie (2) qui est configurée pour estimer la topologie du système de puissance électrique sur la base d'informations reçues depuis le système de puissance électrique.

6. Système d'estimation d'état selon la revendication 5, dans lequel un processus, effectué par la section de traitement de topologie (2), consistant à estimer la topologie du système de puissance électrique ;

   un processus, effectué par la section de jugement, consistant à juger si oui ou non des informations de phases réelles peuvent être obtenues à partir des informations de valeurs instantanées (D4) ;
   un processus, effectué par la section de traitement de valeurs instantanées (3), consistant à calculer des informations de phase et une valeur réelle à partir des informations de valeurs instantanées (D4) dans un cas où il est jugé que des informations de phases réelles peuvent être obtenues à partir des informations de valeurs instantanées (D4), ou un processus, effectué par la section de traitement de valeurs instantanées (3) consistant à calculer une valeur réelle sans calculer d'informations de phases à partir des informations de valeurs instantanées (D4) dans un cas où il est jugé que des informations de phases réelles peuvent être obtenues à partir des informations de valeurs instantanées (D4) ; et
   un processus, effectué par la section d'estimation d'état (4), consistant estimer l'état du système de puissance électrique sur une base : des informations de phases, et de la valeur réelle calculées par la section de traitement de valeurs instantanées (3), ou de la valeur réelle calculée sans calculer les informations de phases ; des informations de mesurage de réception ; et de la topologie du système de puissance électrique sont exécutés à des intervalles fixes.

7. Système d'estimation d'état selon la revendication 1, comprenant en outre une section de sortie d'état qui est configurée pour sortir un résultat d'estimation de l'état du système de puissance électrique estimé par la section d'estimation d'état (4).

8. Système d'estimation d'état selon la revendication 1, comprenant en outre une section de sortie de résultat de jugement qui est configurée pour sortir un résultat du jugement par la section de jugement quant à savoir si oui ou non des informations de phases réelles peuvent être obtenues à partir des informations de valeurs instantanées (D4), conjointement avec une raison pour le jugement.

9. Système d'estimation d'état selon la revendication 1, comprenant en outre :

   une section de génération de section transversale d'accident (6) qui est configurée pour générer une section transversale d'accident du système de puissance électrique sur une base de l'état estimé du système de puissance électrique, et un exemple de cas d'accident qui s'est produit dans le système de puissance électrique ; et
   une section de génération de procédure de stabilisation (7) qui est configurée pour générer une procédure qui améliore une stabilité dans la section transversale d'accident sur la base d'une règle de contre-mesure qui améliore une stabilité à l'encontre d'un accident.

**10.** Procédé d'estimation d'état consistant à estimer un état d'un système de puissance électrique, le procédé d'estimation d'état étant **caractérisé en ce qu'**il comprend les étapes consistant à :

jugé, sur la base d'informations de valeurs instantanées (D4), qui sont des informations de valeurs instantanées reçues depuis le système de puissance électrique, si oui ou non des informations de phases réelles peuvent être obtenues à partir des informations de valeurs instantanées (D4) ;

calculer des informations de phases, et une valeur réelle à partir des informations de valeurs instantanées (D4) dans un cas où il est jugé que des informations de phases réelles peuvent être obtenues à partir des informations de valeurs instantanées (D4), et calculer une valeur réelle sans calculer d'informations de phases à partir des informations de valeurs instantanées (D4) dans un cas où il est jugé que des informations de phases réelles ne peuvent pas être obtenues à partir des informations de valeurs instantanées (D4) ; et

estimer l'état du système de puissance électrique sur la base : des informations de phases calculées, et d'une valeur réelle, ou de la valeur réelle calculée sans calculer les informations de phases ; des informations de mesurage de réception reçues depuis le système de puissance électrique ; et d'une topologie du système de puissance électrique.

# FIG.1

# FIG.2

# FIG.3

# FIG.4

D5

| FREQUENCY SPECTRUM | RATIO OF MISSING INFORMATION | PHASE JUMP | PHASE YES/NO |
|---|---|---|---|
| SMALL NOISE | LOW | NO | YES |
| SMALL NOISE | LOW | YES | NO |
| ... | ... | ... | ... |

# FIG.5

READ IN ELECTRICAL POWER SYSTEM MODEL — S1

READ IN REMOTE TELEMETRY INFORMATION, PHASOR MEASUREMENT INFORMATION, AND INSTANTANEOUS VALUE INFORMATION — S2

GENERATE ELECTRICAL POWER SYSTEM TOPOLOGY — S3

INSTANTANEOUS VALUE PROCESS — S4

STATE ESTIMATION PROCESS — S5

DISPLAY OUTPUT STATE ESTIMATION RESULT — S6

REPEATED AT FIXED INTERVALS

# FIG.6

START

S401
READ IN INSTANTANEOUS
VALUE PROCESS RULE

S402
DETECT FREQUENCY SPECTRUM,
RATIO OF MISSING INFORMATION,
AND PHASE JUMP OF
INSTANTANEOUS VALUES

S403
REFER TO INSTANTANEOUS
VALUE PROCESS RULE

S404
YES  IS PHASE EFFECTIVE?  NO

S405A
CALCULATE EFFECTIVE
VALUE WITH PHASE

S405B
CALCULATE EFFECTIVE
VALUE WITHOUT PHASE

S406
OUTPUT INSTANTANEOUS
VALUE CONVERSION RESULT,
AND PROCESSING REASON

END

# FIG.7

| INSTANTANEOUS VALUES | DETERMINATION |
|---|---|

M1 → PHASE IS TO BE CALCULATED

M2 → PHASE IS NOT TO BE CALCULATED

M3 (MISS-ING) → PHASE IS NOT TO BE CALCULATED

M4 → PHASE IS NOT TO BE CALCULATED

# FIG.8

START

S501

READ IN REMOTE TELEMETRY
INFORMATION, PHASOR
MEASUREMENT INFORMATION,
INSTANTANEOUS VALUE
CONVERSION RESULT,
AND PROCESSING REASON

S502

DOES PROCESSING
REASON INCLUDE REASON
THAT THERE IS MISSING
INFORMATION?

YES                                                        NO

S503

DELETE PMU PHASE
IN PREDETERMINED RANGE

S504

EXECUTE STATE ESTIMATION

S505

OUTPUT STATE
ESTIMATION RESULT

END

# FIG.9

# FIG.10

PHASE CAN BE CALCULATED ⌒1001

DIFFICULT TO CALCULATE PHASE ⌒1002

WITHOUT INSTAN-TANEOUS VALUES

LOAD
496 MW
18 MVar
248 MW
9 MVar
BUS 1
1.03 ∠-10°
BUS 2
1.02 ∠-20°
250 MW
10 MVar
248 MW
9 MVar
BUS 3
1.04 ∠0°
BUS 4
1.03 ∠-10°
500 MW
20 MVar
G
250 MW
10 MVar

STATE ESTIMATION RESULT: CONVERGING
EVALUATION VALUE: 15

LOAD
496 MW
18 MVar
258 MW
9 MVar
BUS 1
1.03 ∠-10°
BUS 2
1.02 ∠-21°
260 MW
10 MVar
238 MW
9 MVar
BUS 3
1.04 ∠0°
BUS 4
1.02 ∠-9°
500 MW
20 MVar
240 MW
10 MVar

STATE ESTIMATION RESULT: NOT CONVERGING
EVALUATION VALUE: 500

WITH INSTAN-TANEOUS VALUES, PROCESS ACCORDING TO THE PRESENT EMBODIMENT

LOAD
496 MW
18 MVar
248 MW
9 MVar
BUS 1
1.03 ∠-10°
BUS 2
1.02 ∠-20°
250 MW
10 MVar
248 MW
9 MVar
BUS 3
1.04 ∠0°
BUS 4
1.03 ∠-10°
500 MW
20 MVar
G
250 MW
10 MVar

STATE ESTIMATION RESULT: CONVERGING
EVALUATION VALUE: 14

⌒1003

LOAD
496 MW
18 MVar
248 MW
9 MVar
BUS 1
1.03 ∠-10°
BUS 2
1.021 ∠-20°
250 MW
10 MVar
249 MW
9 MVar
BUS 3
1.04 ∠0°
BUS 4
1.03 ∠-10°
500 MW
20 MVar
G
250 MW
10 MVar

STATE ESTIMATION RESULT: CONVERGING
EVALUATION VALUE: 5

⌒1004

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200099252
- JP 2014075923 A
- WO 2008120282 A
- US 10666051 B2

**Non-patent literature cited in the description**

- **A. RIEPNIEKS ; H. KIRKHAM ; A. J. FARIS ; M. EN-GELS.** Phase jumps in PMU signal generators. *2017 IEEE Power & Energy Society General Meeting, Chicago, IL,* 2017, 1-5